# EUROPEAN PATENT SPECIFICATION

(11) **EP 1 564 393 B1**
(45) Date of publication and mention of the grant of the patent: **11.07.2012**
(21) Application number: 05100438.0
(22) Date of filing: 25.01.2005
(51) Int. Cl.: F02D 41/10, F02D 41/34

(54) **Fuel injection volume control apparatus**
Vorrichtung zur Steuerung des Kraftstoffeinspritzungvolumens
Dispositif de commande du volume de carburant injecté

(30) Priority: 17.02.2004 JP 2004039613
(43) Date of publication of application: 17.08.2005
(73) Proprietor: HONDA MOTOR CO., LTD., Tokyo (JP)
(72) Inventor: KOBAYASHI, Fuyuki, KABUSHIKI KAISHA HONDA GIJUTSU, SAITAMA (JP); MACHIDA, Kenichi, KABUSHIKI KAISHA HONDA GIJUTSU, SAITAMA (JP); MUROHASHI, Kohsaku, c/o KABUSHIKI KAISHA HONDA, SAITAMA (JP); TAKIGAWA, Toshinao, c/o KABUSHIKI KAISHA HONDA, SAITAMA (JP)
(74) Representative: Poulin, Gérard

(56) References cited:
- JP-A- 60 085 241
- US-A- 5 746 183
- US-A1- 2001 047 795
- US-A1- 2002 007 823

## Description

### Technical Field

The present invention relates to a fuel injection volume control apparatus having control means for determining a fuel injection time period in a fuel injection system.

### [Background Art]

Generally, in a vehicle engine, there has been proposed an engine in which a fuel injection system has been adopted in place of a carburetor as fuel supply means in terms of improved fuel control precision, or cleaned exhaust gas, lower fuel economy and the like. Such a fuel injection engine has generally control means for determining a fuel injection time period in a fuel injection system on the basis of the engine speed and the throttle opening (for example, Patent Document 1).

This conventional control means realizes the variable fuel injection volume in response to the engine speed, and specifically, controls an energizing time period to be applied to the fuel injection system depending on when the engine speed is a predetermined speed or less or any other time than it.
In recent years, even in a motorcycle, there has been proposed an engine in which the fuel injection system has been adopted in place of the carburetor.

### [Patent Document 1] JP-A No. 323187/1994

### Disclosure of the Invention

### Problem to be Solved by the Invention

The fuel injection time period is generally determined by an electronic control unit ECU, but by the time fuel injection is actually started since the fuel injection time period is determined, a time period to some extent may be required. Also, although generally the fuel injection time period is determined in response to throttle opening, when after the fuel injection time period is determined, the throttle opening is abruptly opened and the fuel injection volume to be required increases or the throttle opening is abruptly closed and the fuel injection volume to be required decreases, the conventional control means might be difficult to respond to the request immediately.
Particularly in a case where the engine speed is within a low speed region, this tendency grows because when the throttle opening is frequently opened and closed, an injection interval is left.

It is an object of the present invention to solve problems of the conventional technique described above, and to provide a fuel injection volume control apparatus capable of supplying the proper amount of fuel by improving the response when the throttle opening is abruptly opened and the like, or by responding to a decrease in a necessary amount of the fuel when the throttle opening is abruptly closed.

### Means for Solving the Problem

According to the present invention, there is provided a fuel injection volume control apparatus having control means for determining a fuel injection time period in a fuel injection system on the basis of the engine speed and the throttle opening, characterized in that the control means is equipped with means for determining a first fuel injection time period on the basis of the engine speed and the throttle opening to start fuel injection, and for correcting the fuel injection time period determined at the first time on the basis of changes in the engine speed and the throttle opening within a predetermined time period.
According to the present invention, since when it has become necessary to inject more fuel due to the throttle opening having been abruptly opened and the like after, for example, the first fuel injection time period is determined to start fuel injection, the shortage can be supplied immediately, a response when the throttle opening is abruptly opened can be improved. Also, for example, when after the first fuel injection time period is determined to start the fuel injection, the fuel injection volume to be required has become smaller due to the throttle opening being abruptly closed or the like, the fuel injection time period is corrected so as to make it shorter, whereby the proper amount of the fuel can be supplied.

In this case, only when the engine speed is within a low speed region, it may be possible for the control means to determine a second fuel injection time period and on the basis of this determination, to correct the fuel injection time period determined at the first time.
When the engine speed is within a low speed region, since in an electronic control unit ECU, an amount of interruption of a pulser or the like is small, even if a corrected injection time period corresponding to the second one is determined after the basic injection time period has been determined, a load on the CPU is light, and the control can be executed without placing any excessive load on the electronic control unit.

Also, in this case, when the engine speed is not within a low speed region, the control means may not determine the second fuel injection time period, but inject the fuel on the basis of the fuel injection time period determined at the first time.
When the engine speed is not within the low speed region, that is, when it is within a high speed region, in the electronic control unit ECU, the amount of interruption of the pulser or the like increases. In such a case, since the corrected injection time period corresponding to the second one is not determined, but the fuel injection is executed in accordance with the basic injection time period determined at the first time, the control can be executed without placing any excessive load on the electronic control unit even thereby.

Further, when the fuel injection time period determined at the first time is the predetermined value or less, the control means may inject the fuel only after it is delayed by a predetermined time period.
Generally, in order to optimize the fuel supply, it is preferable to inject fuel, for example, immediately before an inlet valve is opened for supplying fuel to be required at the substantially same timing as intake timing into the engine cylinder.
In the present invention, since when the basic injection time period by the first determination is a predetermined value or less, the injection start timing is delayed for injecting the fuel, it becomes possible to supply fuel to be required at the substantially same timing as intake timing into the engine cylinder.

### Effect of the Invention

According to the present invention, it becomes possible to improve a response, for example, when the throttle opening is abruptly opened, or to respond to a decrease in fuel of an amount required when the throttle opening is abruptly closed for supplying the proper amount of fuel.

### [Best Mode for Carrying Out the Invention]

### Brief Description of the Drawings

Fig. 1 is a side view showing a motorcycle according to the present invention;
Fig. 2 is a plan view showing a body frame;
Fig. 3 is an enlarged view showing the body frame;
Fig. 4 is a cross-sectional view showing an engine;
Fig. 5 is a cross-sectional view showing the engine;
Fig. 6 is a block diagram showing an electronic control unit;
Fig. 7 is a flow chart showing a correction process for an injection time period;
Figs. 8A and 8B are time charts showing the correction process;
Fig. 9 is a time chart showing another correction process;
Fig. 10 is a flow chart showing another correction process;
Fig. 11 is a time chart showing another correction process; and
Fig. 12 is a flow chart showing another correction process.
Hereinafter, with reference to the accompanying drawings, the description will be made of an embodiment of the present invention.

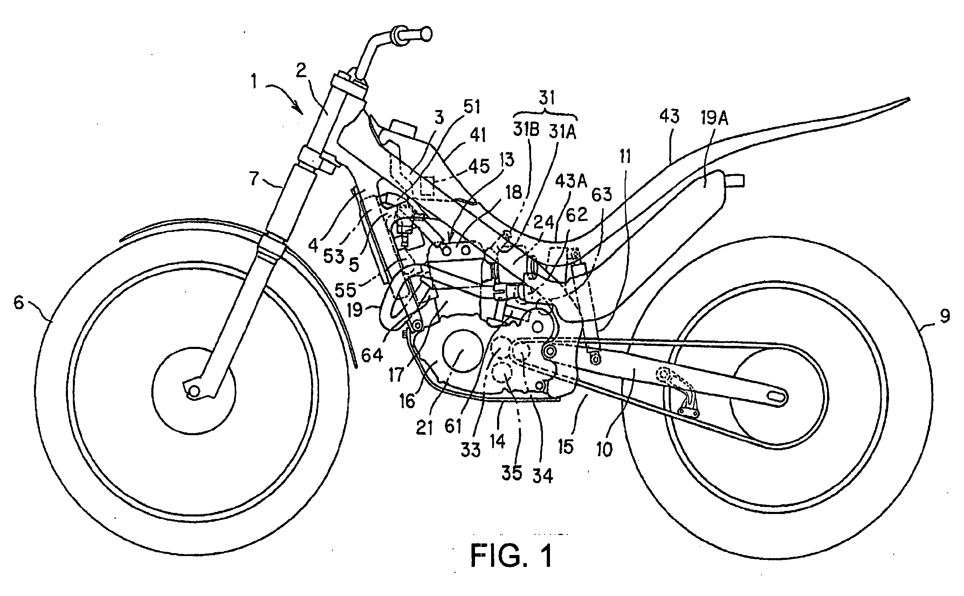

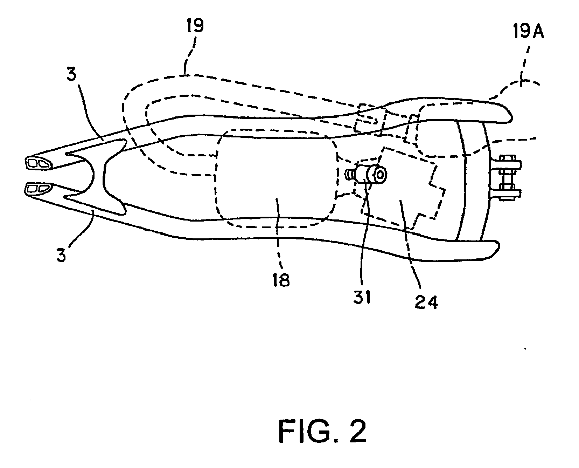

Figs.1 and 2 show a motorcycle (trial vehicle) for running on a wasteland (off-road). This motorcycle is provided with a body frame 1, and this body frame 1 is constructed by having: a head pipe 2 arranged at the front end portion; a pair of main frames 3 pointing from this head pipe 2 toward the rear of the vehicle body, and extending obliquely downward toward the rear with a space left in the widthwise direction of the vehicle body; a pair of down tubes 4 for extending obliquely downward toward the rear with a space left in the widthwise direction of the vehicle body likewise at a larger angle than the main frame 3 concerned below this main frame 3; and a coupling portion 5 for coupling these main frames 3 to the down tube 4.
To the head pipe 2, a front fork 7 for supporting a front wheel 6 is coupled so as to be able to be steered; at the lower end portion of the main frame 3, a rear fork 10 for supporting a rear wheel 9 is coupled so as to be able to swing in the up-and-down direction; and between this rear fork 10 and the body frame 1, there is interposed a rear cushion 11.

Between the upper half portions of the main frame 3, there is placed a fuel tank 41, and to this fuel tank 41, there is mounted a fuel pump 45. Also, continuous to this fuel tank 41, above the lower half portion of the main frame 3, there is arranged a body cover 43 for making a central portion 43A in the back-and-forth direction of the vehicle body lower.

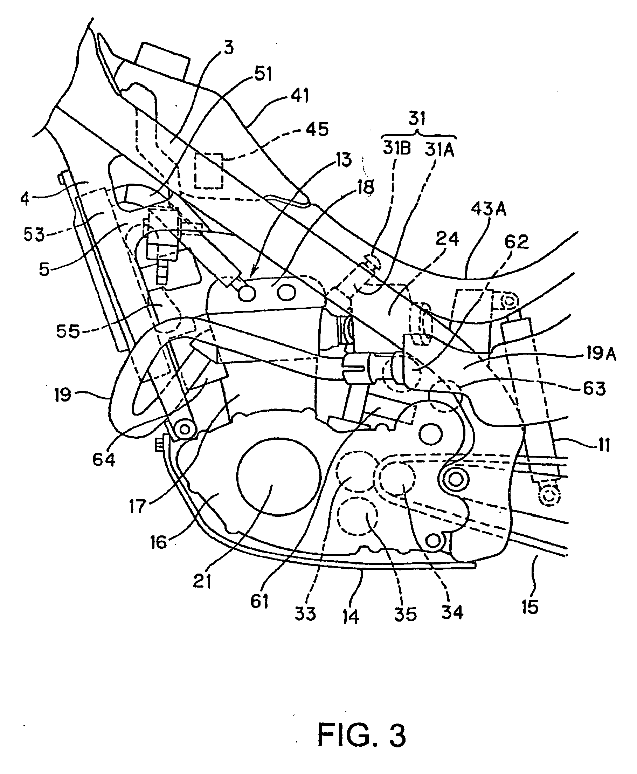

Between the main frame 3 and the down tube 4, a single-cylinder four-cycle engine 13 has been installed so as to be positioned close to an inclined portion (main frame 3) of the bode frame 1 via a plurality of brackets as shown in Fig. 3, and the underside of this engine 13 is covered with an engine guard 14. Power of this engine 13 is transmitted to the rear wheel 9 via a chain transmission system 15 (Fig. 1). The above-described engine 13 has a cylinder block 16, a cylinder 17 and a cylinder head 18. On the front side of this cylinder head 18, there is connected an exhaust pipe 19, and this exhaust pipe 19 passes through on the left side of the engine 13, extends toward the rear of the vehicle body, and is coupled to a muffler 19A.

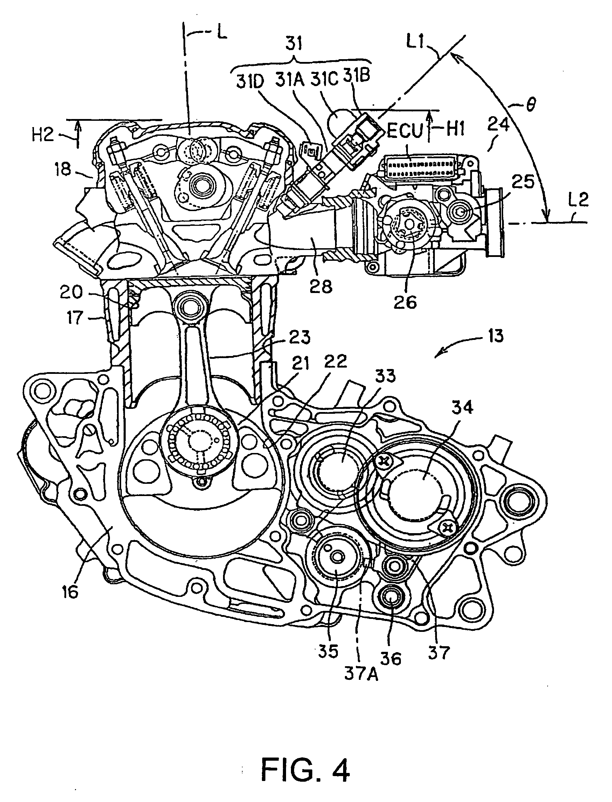

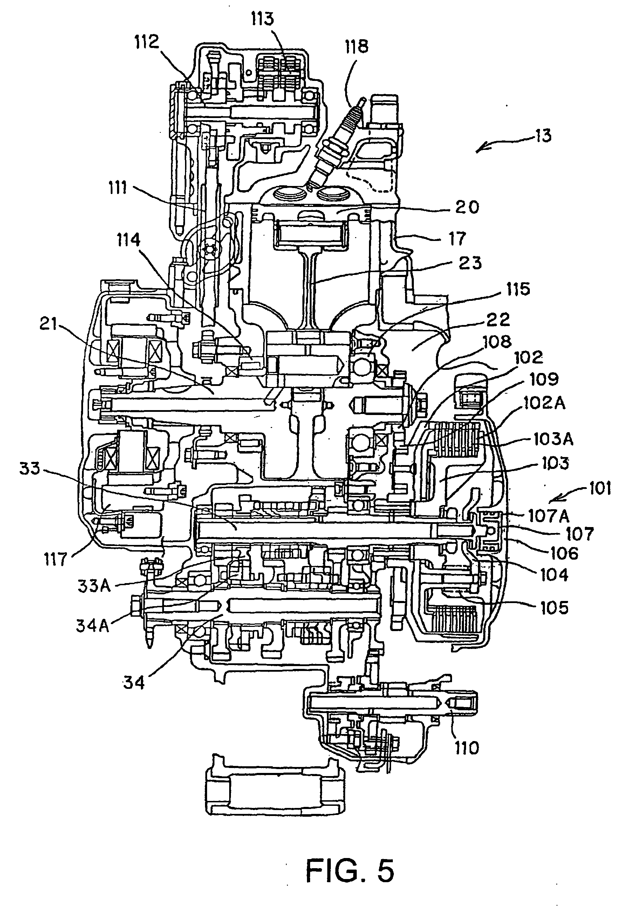

In the cylinder 17, there is provided a piston 20 in such a manner as to be freely slidable as shown in Figs. 4 and 5, this piston 20 is coupled to a crankshaft 21 via a connecting rod 23, and this crankshaft 21 is axially supported on a crankcase 22.
Also, on the backside of the cylinder head 18, as shown in Fig. 4, there is coupled a throttle body 24 to substantially intersect an axis L of the cylinder 17 at right angles, and cleaned air for combustion is supplied to this throttle body 24 via an air cleaner (not shown).
The throttle body 24 has an idling adjustment screw 25 and a throttle valve 26. When, for example, the screw 25 is turned to the right during idling adjustment, opening of the throttle valve 26 is opened, and an amount of air to be supplied increases to increase the engine speed. When the screw 25 is turned to the left, the opening of the throttle valve 26 is closed, and the amount of air decreases to decrease the engine speed.

The downstream of the throttle valve 26 fronts on an intake passage 28 of the cylinder head 18, and an injector (fuel injection system) 31 fronts on this intake passage 28.
This injector 31 is directly installed to the cylinder head 18 such that an axis L1 of the injector 31 has a predetermined angle (acute angle) θ with respect to an axis L2 of the throttle body 24. Also, this injector 31 is arranged such that the body 31A (Fig. 1) substantially completely overlaps the main frame 3 in a direction of height of the body of the motorcycle, and yet a cap portion 31B (Fig. 1), which is a part thereof, protrudes above the main frame 3 and is brought close to the back surface of the body cover 43.
Further, this injector 31 has a connection port 31C of a fuel tube, and to this connection port 31C, there is connected a fuel pump 45 (See Fig. 1) attached to the fuel tank 41, and fuel is supplied via this fuel pump 45.

The electronic control unit ECU has been integrally mounted to the throttle body 24, and this electronic control unit ECU is connected to a coupler 31B of the injector 31 via a signal cable (not shown).

On the crankcase 22, as shown in Figs.4 and 5, in addition to the crankshaft 21, there are supported a main shaft 33, a countershaft 34, a shift drum 35, a shift spindle 36 and a shift fork 37, and these constitute a constant-mesh type gear speed change system. In this case, a rotating force of the crankshaft 21 is transmitted to the main shaft 33 or is cut off via a friction multiple disc clutch 101 shown in Fig. 5.
This crankshaft 21 is supported on both a roller bearing 114 and a radial ball bearing 115.

This multiple disc clutch 101 is coaxially arranged to the main shaft 33, and is constructed by having: a clutch outer 102 having clutch disks 102A; a clutch center 103 having clutch plates 103A; a pressure plate 104 movable in the axial direction for engaging the clutch by pressing the clutch plates 103A against the clutch disks 102A; a plurality of clutch springs 105 for biasing this pressure plate 104 in a clutch engaging direction; and a clutch disengaging mechanism 106 for moving the pressure plate 104 in a clutch disengaging direction.
This clutch disengaging mechanism 106 has a release cylinder 107, and a space portion 107A filled with oil within this release cylinder 107 is connected to the oil cylinder connected to the clutch lever (not shown).
In this respect, reference numeral 110 designates a kick shaft; 111, a cam chain; 112, a camshaft: and 113, a rocker shaft.

At the end of the crankshaft 21 on the multiple disc clutch 101 side, there is fixed a gear 108, and a gear 109 fixed to the clutch outer 102 of the multiple disc clutch 101 engages this gear 108. Therefore, when the crankshaft 21 rotates, the clutch outer 102 always rotates via these gears 108, 109.
During clutch engagement, the pressure of the oil, with which the space portion 107A of the release cylinder 107 has been filled, presses the pressure plate 104 in the left direction in the drawing, and a biasing force of the clutch spring 105 presses the clutch center 103 in the left direction in the drawing, whereby the clutch plate 103A is pressed against the clutch disk 102A. In this state, a rotating force of the crankshaft 21 transmitted to the clutch outer 102 via the above-described gears 108, 109 is further transmitted to the clutch center 103 via the clutch disk 102A and the clutch plate 103A, and is transmitted to the main shaft 33 via this clutch center 103.
When the clutch has been disengaged, by operating the clutch lever (not shown), the oil, with which the space portion 107A has been filled, escapes on the oil cylinder side connected to the clutch lever. Thereby, the pressure plate 104 moves in the right direction in the drawing, the biasing force of the clutch spring 105 becomes weaker, and a press contact state between the clutch disk 102A and the clutch plate 103A is released. When this state is released, the clutch center 103 idles to cut off the transmission of power to the main shaft 33.

The rotating force transmitted from the crankshaft 21 to the main shaft 33 is transmitted to the counter shaft 34 after its speed is changed into, for example, first speed, second speeder third speed via the gear speed change unit; is transmitted to an output shaft (not shown) coupled to this counter shaft 34 via a gear; and is transmitted to the rear wheel 9 from the output shaft via the chain transmission system 15 as power of the engine 13.

When changing the speed into, for example, first speed, second speed or third speed, a change pedal (not shown) fitted to the crankcase of the motorcycle is operated.
When operating this change pedal, the clutch lever (not shown) is first operated prior to this operation to cut off a connection between the crankshaft 21 and the main shaft 33 via the multiple disc clutch 101.
Next, in a state in which the connection has been cut off, the change pedal is operated. This change pedal is coupled to the shift spindle 36 shown in Fig. 4, and when this change pedal is operated, the shift spindle 36 rotates, and in synchronization therewith, the shift drum 35 rotates via a gear mechanism (not shown) . This rotation slides either of the shift forks 37 in the axial direction via a shift pin 37A engaged with a groove (not shown) of the shift drum 35. This shift fork 37 operated moves either gear 34A (Fig. 5) on the counter shaft 34 in the axial direction to engage either gear 33A (Fig. 5) on the main shaft 33.

A gear ratio is determined by gears to be engaged each other, and the rotating force transmitted from the crankshaft 21 to the main shaft 33 is transmitted to the counter shaft 34 after its speed is changed into first speed, second speed or third speed in accordance with its gear ratio via the gear speed change unit; is transmitted to an output shaft (not shown) coupled to this counter shaft 34 via a gear; and is transmitted to the rear wheel 9 from the output shaft via the chain transmission system 15 as power of the engine 13.

The above-described engine is a water-cooled engine. Referring to Fig. 1, to a water jacket of the cylinder head 18, there is connected one end of a pair of hoses 51, and the other end of each hose 51 is connected to a radiator 53 supported between the down tubes 4. Reference numeral 55 designates a radiator fan. By driving the engine, a water pump (not shown) is driven; cooling water that has cooled the engine by the water jacket circulates in the radiator 53; is cooled by wind due to running; and circulates to the water jacket.

To the above-described engine, there is coupled an alternator 117 (Fig. 5), and to this alternator 117, there are connected two capacitors 62, 63 having different uses via a regulator 61. One capacitor 62 is connected to an ignition plug 118 (Fig. 5) of the engine 13 via an ignition coil 64, and to this ignition plug 118, voltage boosted by an ignition coil 64 is applied. The other capacitor 63 is connected to the above-described injector 31 and fuel pump 45, and is used for a fuel injection system. These two capacitors 62, 63 are provided at the lower end portion of the main frame 3 such that one part overlaps or is flush with the underside of the lower end portion concerned, whereby the layout efficiency is improved. Having been divided into two capacitors 62, 63, the fuel injection system becomes possible to perform control that is difficult to be affected by noise due to the ignition coil 64.

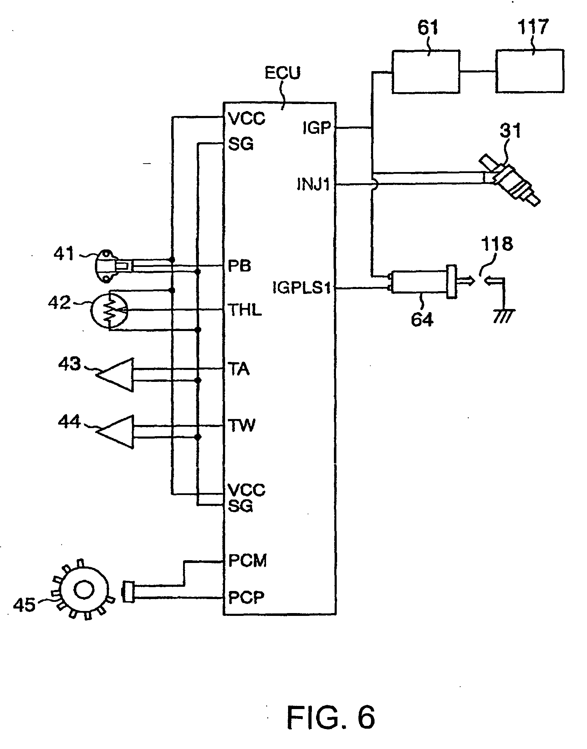

To the above-described electronic control unit ECU, as shown in Fig. 6, there are connected a negative pressure sensor 41, a throttle sensor 42, an intake temperature sensor 43, an engine cooling water temperature sensor 44, and an engine speed sensor (crank angle sensor) 45; there are also connected the alternator 117 and a regulator 61; further, the above-described injector 31 is connected via a signal cable; and further the ignition coil 64 and the ignition plug 118 are connected.
The above-described engine 13 is a single-cylinder four-cycle engine, and in this case, the electronic control unit ECU determines fuel injection volume every two revolutions (720°) of the crankshaft 21, transmits the result to the injector 31, and injects the fuel into the intake passage 28 of the cylinder head 18 only for a time period corresponding to the fuel injection volume.

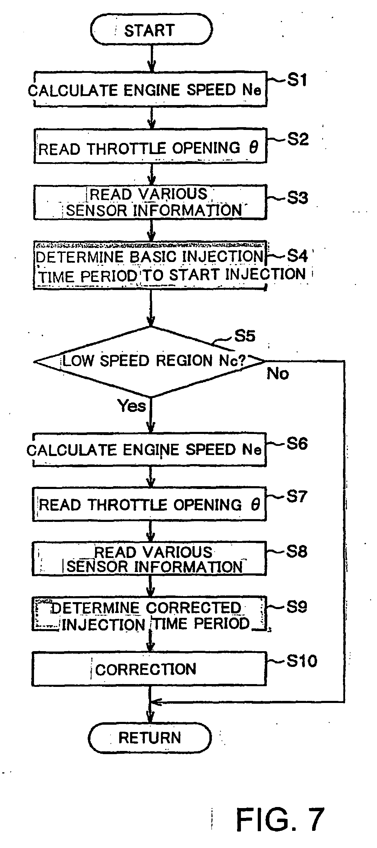

Fig. 7 is a flow chart for explaining a process for determining a fuel injection time period.
The electronic control unit ECU calculates engine speed Ne on the basis of information of the engine speed sensor 45 (S1), reads throttle opening θ from the throttle sensor 42 (S2), and further reads various sensor information (for example, information based on the negative pressure sensor 41, the intake temperature sensor 43, the engine cooling water temperature sensor 44 and the like) (S3).
Thus, on the basis of the engine speed Ne, the throttle opening θ and various sensor information, the electronic control unit ECU calculates the fuel injection time period (hereinafter, basic injection time period) corresponding to the first fuel injection volume to start fuel injection in accordance with it (S4).

Next, the electronic control unit ECU judges whether or not the engine speed Ne is within a low speed region NC (S5). Only when it is within the low speed region NC, the electronic control unit ECU calculates the engine speed Ne again at predetermined timing within a predetermined time period during fuel injection in accordance with the basic injection time period (S6); reads the throttle opening θ (S7) ; and reads various sensor information (S8) . Thus, on the basis of these engine speed Ne, throttle opening θ and various sensor information, the electronic control unit ECU calculates a second fuel injection time period (hereinafter, corrected injection time period) (S9).
The fuel injection time period is basically determined on the basis of the engine speed Ne and the throttle opening θ. Since, however, intake air volume of the engine responsive to the throttle opening θ varies with the engine operating condition, the intake air volume is, in the present structure, determined after the information of the throttle opening θ is corrected on the basis of various sensor information.
Next, on the basis of the corrected injection time period determined in S9, the basis injection time period determined at the first time is corrected (S10) . In this correction process, the basis injection time period determined at the first time may be renewed by the corrected injection time period.

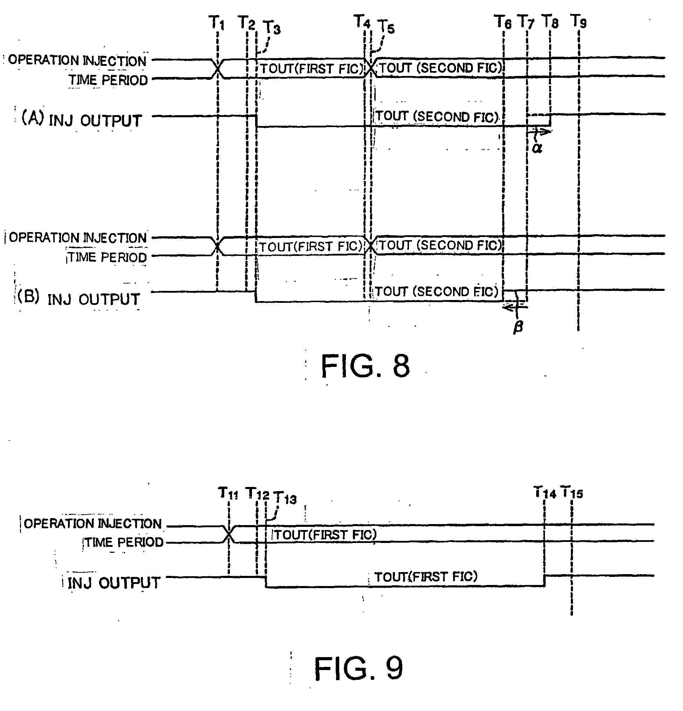

Fig. 8 is a correction time chart.
Fig. 8A shows a case where basic injection time period < corrected injection time period. In this case, at time T1, the basic injection time period is determined; at T2, a first injection timer is set; and at T3, slightly delayed from this setting, fuel injection by the injector 31 is started. The basic injection time period in this case is T3 to T7.
Next, at predetermined timing, that is, T4, the corrected injection time period is determined, and at T5, a second injection timer is set. If the corrected injection time period at this time is T3 to T8, in S10 in Fig. 7, the basic injection time period is extended by a time period α corresponding to the difference by correction. In this case, the predetermined timing can be set by linking with the crank angle of the crankshaft 21. T9 is a limit of completion of injection.
According to this, since even if it becomes necessary to inject more fuel due to the throttle opening being abruptly opened or for any other reason after, for example, the basic injection time period is determined and fuel injection is started, it is possible to supply the shortage immediately, it is possible to improve response to fuel supply, for example, during abrupt opening of the throttle opening or the like.

Fig. 8B shows a case where basic injection time period > corrected injection time period. In this case, at time T1, the basic injection time period is determined; at T2, a first injection timer is set; and at T3, slightly delayed from this setting, fuel injection by the injector 31 is started. The basic injection time period in this case is T3 to T7.
Next, at predetermined timing, that is, T4, the corrected injection time period is determined, and at T5, a second injection timer is set. If the corrected injection time period at this time is T3 to T6, in S10 in Fig. 7, the basic injection time period is shortened by a time period β corresponding to the difference by correction. T9 is the limit of completion of injection.
According to this, even if the fuel injection volume to be required is reduced due to the throttle opening being abruptly closed or the like after, for example, the basic injection time period is determined and fuel injection is started, it becomes possible to supply the proper amount of fuel by shortening the injection time period.

The above-described motorcycle is a trial vehicle for a competition, and in this case, particularly when the engine speed is within a low speed region, the throttle opening is frequently opened and closed by a rider.
In the present embodiment, even in such a case, it is possible to sufficiently respond to the rider's operating request.

When the engine speed is not within a low speed region NC in S5 of Fig. 7, that is, when it is within a high speed region, the fuel injection is executed on the basis of the basic injection time period determined at the first time, and such determination of the corrected injection time period as shown in S6 to S9 will not be executed.

Fig. 9 is the time chart.
At T11, the basic injection time period is determined; at T12, the first injection timer is set; and at T13, slightly delayed from this setting, the fuel injection by the injector 31 is started. The basic injection time period is T13 to T14. When the engine speed is within a high speed region, the second corrected injection time period is not determined, but at T14, the fuel injection by the injector 31 is ended. T15 is the limit of completion of injection.
According to this, since when the engine speed is within a high speed region, the second corrected injection time period is not determined, a load on the electronic control unit ECU in a high speed region in which an amount of interruption of pulser or the like increases can be restricted.

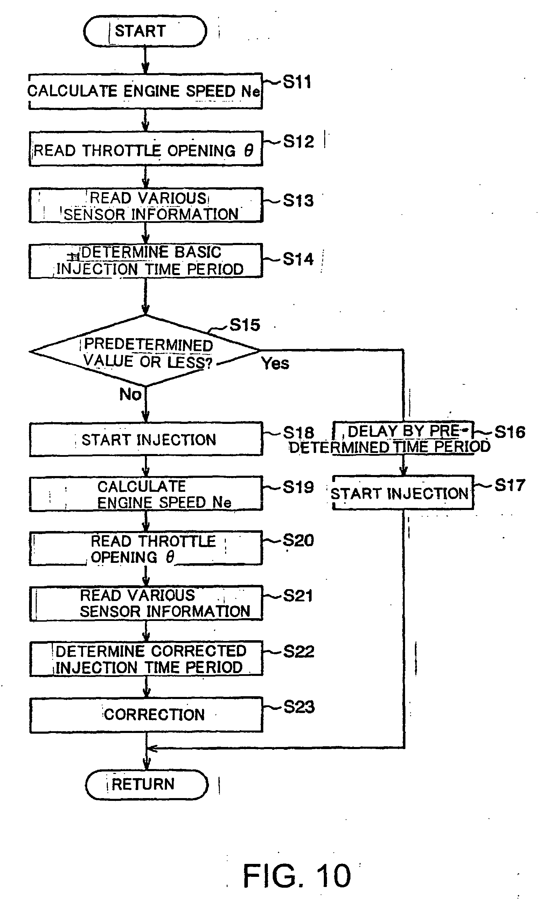

Fig. 10 shows a flow chart for another embodiment.
In this case, when the basic fuel injection time period determined at the first time is the predetermined value or less, the second corrected injection time period is not determined, but the fuel injection will be executed on the basis of the fuel injection time period determined at the first time for the first time after delayed by a predetermined time period.
In other words, in Fig. 10, the electronic control unit ECU calculates engine speed Ne (S12), reads throttle opening θ (S12), and further reads various sensor information (S13) . Thus, on the basis of the engine speed Ne, the throttle opening θ and various sensor information, the electronic control unit ECU determines the first basic injection time period (S14).

Next, the electronic control unit ECU judges whether or not the first basic injection time period is a predetermined value or less (S15). When this is the predetermined value or less, after delayed by a predetermined time period that has been set in advance (S16), fuel injection in compliance with the basic injection time period is started (S17), and the injection is executed in accordance with the basic injection time period. Also, when the first basic injection time period exceeds the predetermined value in S15, the fuel injection is started in accordance with the first basic injection time period (S18). Thus, as in the case of the above-described embodiment, the electronic control unit ECU calculates the engine speed Ne again at predetermined timing within a predetermined time period during fuel injection in compliance with the basic injection time period (S19) ; reads the throttle opening θ (S20) ; and reads various sensor information (S21) . Further, on the basis of these engine speed Ne, throttle opening θ and various sensor information, the electronic control unit ECU determines a second corrected fuel injection time period (S22) ; corrects the basic injection time period determined at the first time on the basis of the corrected injection time period determined in S22 in accordance with the similar processing to the above-described correction processing (S23) . Inthiscorrectionprocessing, the basic injection time period determined at the first time may be renewed by the corrected injection time period.

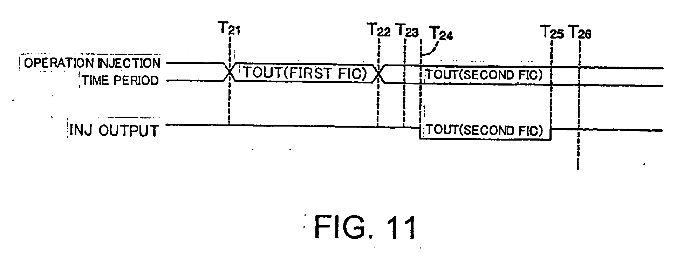

Fig. 11 is a time chart showing the processing of Fig. 10. At T21, the basic injection time period is determined, and it is judged whether or not this basic injection time period is a predetermined value or less.
When it is the predetermined value or less, after delayed for a predetermined time period, at T24, injection in compliance with the basis injection time period (the corrected injection time period is not determined) is started, and at T25, the injection is completed. T26 is the limit of completion of injection. Delay time periods T21 to T24 in this case substantially correspond to a total amount of a time period T22 corresponding to determination of the corrected injection time period, a time period T23 corresponding to setting of the injection timer, and a slightly delayed time period T24 in the above-described embodiment.
In the present embodiment, since when the basic injection time period is the predetermined value or less, the fuel injection is started by delaying start timing of fuel injection at least after time whereat the corrected injection time period should be primarily determined, the fuel can be supplied into the cylinder of the engine 13 at the substantially same timing as intake timing. Therefore, immediately before the inlet valve of the cylinder head 18 is opened, the fuel injection is executed and the fuel supply can be optimized.

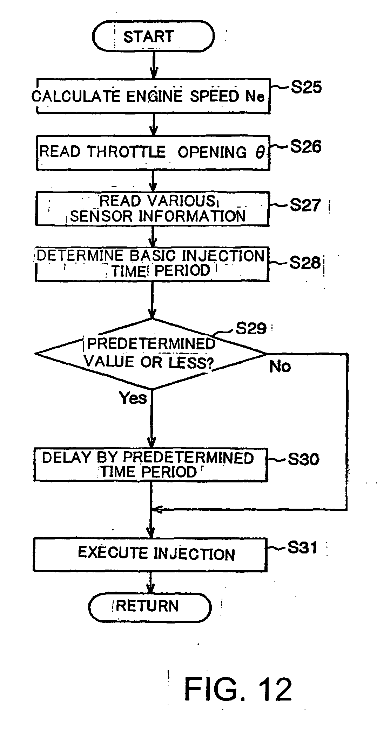

Fig. 12 shows a flow chart according to further another embodiment.
In other words, the electronic control unit ECU calculates engine speed Ne (S25), reads throttle opening θ (S26), and further reads various sensor information (S27) . Thus, on the basis of the engine speed Ne, the throttle opening θ and various sensor information, the electronic control unit ECU determines the first basic injection time period (S28) . Next, the electronic control unit ECU judges whether or not the first basic injection time period is a predetermined value or less (S29). When this is the predetermined value or less, after delayed by a predetermined time period that has been set in advance (S30), fuel injection in compliance with the basic injection time period is started, and the injection is executed in accordance with the basic injection time period (S31) . Delay time periods in this case can be caused to substantially correspond to a total amount of a time period T22 corresponding to determination of the corrected injection time period, a time period T23 corresponding to setting of the injection timer, and a slightly delayed time period T24 in the above-described embodiment. Also, when in S29, the first basic injection time period exceeds the predetermined value, the fuel injection will be started in accordance with the first basic injection time period without delaying the injection time (S31).
According to this, since when the basic injection time period is the predetermined value or less, the injection is started by delaying by the predetermined time period, the fuel can be supplied into the cylinder of the engine 13 at the substantially same timing as intake timing. Therefore, immediately before the inlet valve of the cylinder head 18 is opened, the fuel injection is executed and the fuel supply can be optimized.

Although the description has been made of the present invention on the basis of an embodiment above, it is obvious that the present invention is not limited thereto. In the correction of the basic injection time period of the above-described embodiment, the corrected injection time period has been determined and the basic injection time period has been corrected by comparing with the corrected injection time period, but by directly comparing, for example, the first and second engine speeds Ne and throttle openings θ without determining the corrected injection time period, on the basis of this comparison, the basic injection time period may be corrected. Also, in the above-described embodiment, when completion of the fuel injection exceeds the limit of completion of injection, control for completing this fuel injection is executed before the limit of completion of injection.

## Claims

1. A fuel injection volume control apparatus for a single-cylinder four-cycle engine for a trial vehicle, said apparatus having control means for determining a fuel injection time period in a fuel injection system on the basis of engine speed and throttle opening,
**characterized in that** said control means is equipped with means for determining a first fuel injection time period on the basis of the engine speed and the throttle opening to start fuel injection, and for correcting the fuel injection time period determined at the first time on the basis of changes in the engine speed and the throttle opening within a predetermined time period,
**in that** only when said engine speed is within a low speed region, said control means determines a second fuel injection time period and on the basis of this determination, corrects the fuel injection time period determined at the first time, during fuel injection in accordance with the basic injection time period,
**in that** when the engine speed is not within a low speed region, said control means does not determine the second fuel injection time period, but injects the fuel on the basis of the fuel injection time period determined at the first time,
and **in that** when the fuel injection time period determined at the first time is a predetermined value or less, said control means injects the fuel only after it is delayed by at least after time whereat the second fuel injection time period should be primarily determined.

## Patentansprüche

1. Vorrichtung zur Steuerung des Kraftstoffeinspritzvolumens für einen Einzylinder-Viertakt-Verbrennungsmotor für ein Testfahrzeug, wobei die Vorrichtung eine Steuereinrichtung zum Ermitteln einer Kraftstoffeinspritzzeitdauer in einem Kraftstoffeinspritzsystem auf Basis der Verbrennungsmotorgeschwindigkeit und der Öffnung der Drosselklappe aufweist,
**gekennzeichnet dadurch, dass** die Steuereinrichtung versehen ist mit einer Einrichtung zum Ermitteln einer ersten Kraftstoffeinspritzzeitdauer auf der Basis der Verbrennungsmotorgeschwindigkeit und der Öffnung der Drosselklappe, um mit der Kraftstoffeinspritzung zu beginnen, und zum Korrigieren der beim ersten Mal ermittelten Kraftstoffeinspritzzeitdauer auf der Basis von Änderungen der Verbrennungsmotorgeschwindigkeit und der Öffnung der Drosselklappe innerhalb einer vorgegebenen Zeitdauer,
**dadurch**, dass die Steuereinrichtung nur dann eine zweite Kraftstoffeinspritzzeitdauer ermittelt, wenn sich die Verbrennungsmotorgeschwindigkeit innerhalb eines niedrigen Geschwindigkeitsbereichs befindet, und auf der Basis dieser Ermittlung die beim ersten Mal ermittelte Kraftstoffeinspritzzeitdauer während der Kraftstoffeinspritzung in Übereinstimmung mit der Basis-Einspritzzeitdauer korrigiert,
**dadurch**, dass die Steuereinrichtung die zweite Kraftstoffeinspritzzeitdauer nicht vermittelt, wenn sich die Verbrennungsmotorgeschwindigkeit nicht innerhalb eines niedrigen Geschwindigkeitsbereichs befindet, sondern den Kraftstoff auf Basis der beim ersten Mal ermittelten Kraftstoffeinspritzzeitdauer einspritzt,
und **dadurch**, dass, wenn die beim ersten Mal ermittelte Kraftstoffeinspritzzeitdauer einen vorgegebenen Wert oder weniger beträgt, die Steuereinrichtung den Kraftstoff erst einspritzt, nachdem sie zumindest eine Zeit nach der Zeit verzögert wurde, zu der im wesentlichen die zweite Kraftstoffeinspritzzeitdauer ermittelt werden soll.

## Revendications

1. Dispositif de commande du volume d'injection de carburant pour un moteur à quatre temps et un cylindre pour un véhicule de trial, ledit dispositif ayant des moyens de commande pour déterminer une période de temps d'injection de carburant dans un système d'injection de carburant en fonction de la vitesse du moteur et de l'ouverture du papillon des gaz,
**caractérisé en ce que** lesdits moyens de commande sont équipés de moyens pour déterminer une première période de temps d'injection de carburant en fonction de la vitesse du moteur et de l'ouverture du papillon des gaz pour démarrer l'injection de carburant et pour corriger la période de temps d'injection de carburant déterminé la première fois en fonction des changements du point de vue de la vitesse du moteur et de l'ouverture du papillon des gaz dans une période de temps prédéterminée,
**en ce que**, uniquement lorsque ladite vitesse du moteur est dans une région de vitesse lente, lesdits moyens de commande déterminent une seconde période de temps d'injection de carburant et en fonction de cette détermination, corrige la période de temps d'injection de carburant déterminée la première fois, pendant l'injection de carburant selon la période de temps d'injection de base,
**en ce que** lorsque la vitesse du moteur n'est pas dans une région de vitesse lente, lesdits moyens de commande ne déterminent pas la seconde période de temps d'injection de carburant, mais injectent le carburant en fonction de la période de temps d'injection de carburant déterminée la première fois,
et **en ce que** lorsque la période de temps d'injection de carburant déterminée la première fois est une valeur prédéterminée ou inférieure, lesdits moyens de commande injectent le carburant uniquement après qu'ils ont été retardés au moins après coup, au moment duquel la seconde période de temps d'injection de carburant devait être préalablement déterminée.
